# EUROPEAN PATENT APPLICATION

(11) **EP 4 656 785 A2**
(43) Date of publication of application: **03.12.2025**
(21) Application number: 25210059.9
(22) Date of filing: 27.04.2022
(51) Int. Cl.: D04B 1/12, D04B 1/24, A41D 31/102, A41D 31/12, B32B 5/02, B32B 5/26, B32B 7/09, D04B 1/18

(54) **MOISTURE WICKING AND PERSPIRATION CONCEALING TEXTILE**

(30) Priority: 27.04.2021 US 202163180341 P; 26.04.2022 US 202217729532
(62) Divisional of application: 22724972.9
(71) Applicant: NIKE Innovate C.V., Beaverton, Oregon 97005 (US)
(72) Inventor: AMIN, Namrata C, Beaverton, 97005 (US); DURRELL, Lauren E., Beaverton, 97005 (US); LO, Iris, 406 Taichung (TW)
(74) Representative: Müller-Boré & Partner Patentanwälte PartG mbB

(57) **Abstract**

An upper-body garment comprising a knit spacer textile that comprises a first knit layer formed from a first plurality of yarns that has been treated with a durable water repellant (DWR) finish prior to being formed in the first knit layer. The knit spacer textile further comprising a second knit layer formed from a second plurality of yarns that has been treated with a wicking finish prior to being formed into the second knit layer, and a plurality of tie yarns that interconnect the first knit layer and the second knit layer, wherein the first plurality of yarns and the second plurality of yarns comprise from about 80% by weight to about 90% by weight of the knit spacer textile.

## Description

### FIELD OF THE INVENTION

Aspects herein relate to a moisture wicking and perspiration concealing textile and apparel items made therefrom.

### BACKGROUND OF THE INVENTION

Traditional apparel items having a wicking finish generally move perspiration from a wearer's body surface to an outer-facing surface of the apparel item where the perspiration evaporates. The presence of perspiration on the outer-facing surface of the apparel item may cause modesty issues.

Other traditional apparel items may be constructed of a textile that includes a hydrophobic surface that is positioned adjacent to a body surface of a wearer. The hydrophobic surface may reduce the uptake of perspiration from the wearer's skin surface. While this may lessen the appearance of perspiration on an outer-facing surface of the apparel item, the reduced removal of perspiration from the wearer's skin may be uncomfortable to the wearer.

Constructing textiles that have hydrophobic surfaces and/or wicking surfaces may be done by applying a finish to a finished textile (e.g., a knit or woven textile). Although the finish penetrates the textile surface, it often fails to completely coat the yarns that form the textile. As a result, the efficacy of the finish diminishes relatively quickly over time due to, for instance, washing.

### BRIEF DESCRIPTION OF THE DRAWING

Examples of aspects herein are described below in detail with reference to the attached drawing figures, wherein:
FIG. 1 illustrates a cross-section view of an example knit spacer textile in accordance with aspects herein;
FIG. 2 illustrates a first surface formed by a first knit layer of the knit spacer textile of FIG. 1 in accordance with aspects herein;
FIG. 3 illustrates an opposite second surface formed by a second knit layer of the knit spacer textile of FIG. 1 in accordance with aspects herein;
FIG. 4 illustrates a schematic depiction of a knit structure used to form the first knit layer of the knit spacer textile of FIG. 1 in accordance with aspects herein;
FIG. 5A illustrates a schematic depiction of a first example knit structure used to form the second knit layer of the knit spacer textile of FIG. 1 in accordance with aspects herein;
FIG. 5B illustrates a schematic depiction of a second example knit structure used to form the second knit layer of the knit spacer textile of FIG. 1 in accordance with aspects herein;
FIG. 6 illustrates a schematic of the knit spacer textile of FIG. 1 positioned adjacent a skin surface of a wearer in accordance with aspects herein;
FIG. 7 illustrates an example upper-body garment formed from the knit spacer textile of FIG. 1 in accordance with aspects herein;
FIG. 8 illustrates an example lower-body garment formed from the knit spacer textile of FIG. 1 in accordance with aspects herein; and
FIG. 9 illustrates a flow diagram of an example method of manufacturing the knit spacer textile of FIG. 1 in accordance with aspects herein.

### DETAILED DESCRIPTION OF THE INVENTION

The subject matter of the present invention is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" and/or "block" might be used herein to connote different elements of methods employed, the terms should not be interpreted as implying any particular order among or between various steps herein disclosed unless and except when the order of individual steps is explicitly stated.

Traditional apparel items formed from a textile having a wicking finish generally move perspiration from a wearer's body surface to an outer-facing surface of the apparel item where the perspiration spreads out and evaporates. The presence of perspiration on the outer-facing surface of the apparel item may cause modesty issues. Other traditional apparel items may be constructed of a textile that includes a hydrophobic surface that is positioned adjacent to a body surface of a wearer. The hydrophobic surface may reduce the uptake of perspiration from the wearer's skin surface. While this may lessen the appearance of perspiration on an outer-facing surface of the apparel item, the reduced removal of perspiration from the wearer's skin may be uncomfortable to the wearer. Constructing textiles that have hydrophobic surfaces and/or wicking surfaces may be done by applying a finish to a finished textile (e.g., a knit or woven textile) through, for example, a padding machine. Although the finish penetrates the textile surface, it often fails to completely coat the yarns that form the textile. As a result, the efficacy of the finish diminishes relatively quickly over time due to, for instance, washing.

Aspects herein relate a moisture wicking and perspiration concealing textile, and garments formed therefrom, that is lightweight, low-profile, breathable, and has stretch and recovery properties making it ideal for use in athletic wear. The moisture wicking properties of the textile aid in the removal of perspiration from the wearer's skin surface thereby improving wearer comfort, and the perspiration concealing properties of the textile help prevent the perspiration from showing on an outer-facing surface of a garment formed therefrom which promotes modesty and a clean aesthetic.

In example aspects, the textile is a knit spacer textile that includes a first knit layer formed from yarns that have been treated with a durable water repellant (DWR) finish prior to being formed into the first knit layer and a second knit layer formed from yarns that have been treated with a wicking finish prior to being formed into the second knit layer. The first knit layer and the second knit layer are interconnected by tie yarns that consist of elastic yarns, including bare elastic yarns, in example aspects. When the textile is formed into a garment, the second knit layer is configured to be positioned adjacent to a skin surface of a wearer and the first knit layer forms an outer-facing surface of the garment.

The use of tie yarns serves several functions. For example, the tie yarns help to separate or space apart the first knit layer and the second knit layer which, when combined with the knit construction of the first knit layer and the second knit layer, creates a generally open structure which promotes breathability and permeability. Separating or spacing apart the first knit layer and the second knit layer through the use of tie yarns also prevents contamination of finishes between the layers and helps to isolate a particular finish (e.g., wicking or DWR) to one surface of the textile. This is opposed to, for example a single-knit construction, where, because of the side-by-side positioning of the yarns and the interlooping nature of the knit construction, different finishes applied to the textile have an increased chance of interacting with each other which negates the particular properties of the finish. This is also opposed to, for instance a double-knit construction. In a double-knit construction, although the technical face and the technical back may have different finishes, there may be a transfer of the finishes between the face and back due to the transfers of yarns between the two surfaces during the knitting process. For example, if the technical face is formed from a yarn treated with a DWR finish, and the technical back is formed from a yarn treated with a wicking finish, when the yarn from the technical face transfers to the technical back, the DWR finish will also be transferred to the technical back and vice versa.

The use of bare (i.e., not covered) elastic yarns as the tie yarns as opposed to, for example, other types of yarns such as cotton, nylon, monofilaments, and the like, further helps to isolate the finishes to their respective surfaces. This is because, in general, bare elastic yarns are not good transporters of moisture and, by extension, of finishes. For example, with respect to spandex, spandex has a relatively low moisture regain (approximately 1.3%) compared to other fibers/filaments such as cotton (approximately 7%) and nylon (approximately 4.5%) which makes it less likely to absorb a particular finish and transport the finish between the knit layers. As well, spandex fibers/filaments generally have smooth outer surfaces, which present less channels or surface area for transporting finishes between the two knit layers by way of capillary action. The stretch and recovery properties of elastic yarns help to tension the first and second knit layers toward each other to create a low-profile aesthetic suitable for athletic wear. By contrast, typical knit spacer textiles that do not include elastic tie yarns are generally too bulky to be suitable for athletic wear in the form of, for example, form-fitting leggings or tops.

When a garment formed from the textile described herein is worn, perspiration produced by the wearer is taken up by the second knit layer due to, for example, the moisture wicking finish that coats the yarns forming the second knit layer. The perspiration spreads throughout the second knit layer due to capillary action, and the perspiration then evaporates due to the open structure of the knit spacer textile. The bare elastic yarns minimize the transfer of perspiration to the first knit layer. Any perspiration that is transferred to the first knit layer is repelled by the DWR finish that coats the yarns the form the first knit layer and thus does not show through on an outer-facing surface of the garment. As such, the textile described herein achieves the dual purpose of moisture wicking to remove perspiration from the wearer's skin and promote wearer comfort and concealment of any perspiration taken up by the textile.

Aspects herein contemplate applying the DWR and wicking finishes to the yarns prior to forming the textile. For example, each of the DWR finish and the wicking finish may be applied to the yarn after a yarn dyeing step and before knitting the yarn to form the knit spacer textile. In one example, the yarns may be processed in a water bath containing the appropriate finish such that the finish is uniformly applied to all surfaces of the yarn (known herein as an "exhaustion process"). Applying the finish after dyeing the yarns, particularly with respect to the DWR finish, has been found to create a more durable finish when compared to applying the DWR finish prior to dyeing the yarn. In contrast, application of a finish to an already knitted textile by way of a padding process generally deposits the finish on to the surface of the yarn exposed to the pad, but the finish may not be uniformly applied to all the yarn surfaces making the finish less durable. For example, the finish may be applied to only about 50 to 60% of the surface area of the individual yarns. The application method described above creates a textile having a durable, long-lasting finish able to withstand repeated washings (e.g., up to at least 100 washes).

As used herein, the term "apparel item," "garment," or "athletic apparel item or garment," means an apparel item configured to be worn by a wearer. In example aspects, the apparel item may be worn while the wearer engages in athletic activities. The apparel item may be in the form of a lower-body apparel item, that in some aspects may be form-fitting, such as a legging, tight, capri, short, and the like; an upper-body apparel item, that in some aspects may be form-fitting, such as a shirt or pullover; a support garment such as a sport bra or sport tank, and the like. The term "outer-facing surface" when referring to the apparel item means the surface facing away from the body of a wearer and toward the external environment. The term "inner-facing surface" when referring to the apparel item means the surface facing inwardly or toward the body of the wearer. The term "outermost-facing surface" means the surface that is located furthest away from the body of the wearer with respect to other layers or components of the apparel item, and the term "innermost-facing surface" means the surface that is located closest to the body of the wearer with respect to other layers or components of the apparel item.

The term "knit spacer textile," as used herein is meant to encompass both warp knit and weft knit spacer textiles as is known in the art of textiles. Spacer textiles are generally formed by utilizing at least one tie yarn to interconnect first and second knit layers of the textile. More specifically, each of the first layer and the second layer may be knit separately, and the tie yarn(s) is used to connect the first knit layer and the second knit layer. For instance, the tie yarns may have "loop" portions that extend into each of the first knit layer and the second knit layer where the loop portions are interlooped with yarns in the first knit layer and the second knit layer to connect the two layers.

Because each of the first knit layer and the second knit layer are knit separately, each of the first knit layer and the second knit layer may be knit with different yarn types and/or different knit constructions although the same yarn types and same knit constructions may be used in each of the first knit layer and the second knit layer. Within a given knit layer, a particular yarn may extend throughout at least a portion of that knit layer. To differentiate a knit spacer textile from a double-knit textile, in a double-knit textile, there is a transfer of a yarn from the face layer to the back layer and vice versa. In a knit spacer textile, there is not a transfer of yarns from the first knit layer to the second knit layer. Stated differently, yarns forming the first knit layer are separate and distinct from yarns forming the second knit layer, and the first and second knit layers are only connected by way of the tie yarns.

The term "polyester" when describing, for example, a yarn means a yarn having filaments and/or fibers formed from terephthalate polymers and includes, for example, polyethylene terephthalate (PET), poly 1,4 cyclohexylene-dimethylene terephthalate (PCDT), polybutylene terephthalate (PCT) and polytrimethylene terephthalate (PTT). The term "elastic" as used herein when describing yarns means the ability of a strained or stretched yarn (e.g., stretched up to about 400% of its original length) to substantially recover its original length (e.g., within about 10% or more of its original length) within about 60 seconds or less after removing the stress. A non-elastic yarn may exhibit a degree of mechanical stretch but does not substantially recover its original length (e.g., within about 10% or more of its original length) within 60 seconds after removing the stress. Examples of elastic yarn types include, for instance, spandex (also known as elastane), rubber, TPU polymer yarns, LYCRA^{®}, and the like. The term "bare elastic yarn" as used herein means an elastic yarn that is not covered or wrapped with another yarn such as a polyester yarn.

The term DWR finish as used herein is meant to encompass any chemical that, when applied or incorporated into a textile, facilitates the textile resisting wetting. Example DWR finishes include fluorocarbons, wax emulsions, metallic soaps, surface-active agents, and the like. The term wicking finish as used herein is meant to encompass any chemical that increases the moisture absorbency of a textile and its drying time. In example aspects, the wicking finish acts to change or alter the molecular structure on a fiber or yarn surface so that moisture is broken up into smaller particles that wick more readily. Example wicking finishes include Visa^{®}, Zelcon^{®}, Hydrolon^{®}, Capilene^{®}, and the like.

Various measurement related to the knit spacer textile may be provided herein. For instance, basis weight is measured using ISO3801 testing standard and has the units grams per square meter (gsm). The denier of a fiber/filament may be measured using ASTM D1577-07. The diameter of a fiber may be calculated based on the fiber's denier. The term "recycled polyester" include shredded PET fibers derived from shredded articles, scrap, deadstock, and the like and re-extruded PET fibers (fibers that are re-extruded using recycled PET chips). Unless otherwise noted, all measurements provided herein are measured at standard ambient temperature and pressure (25 degrees Celsius or 298.15 K and 1 bar) with the knit spacer textile in a resting (un-stretched) state.

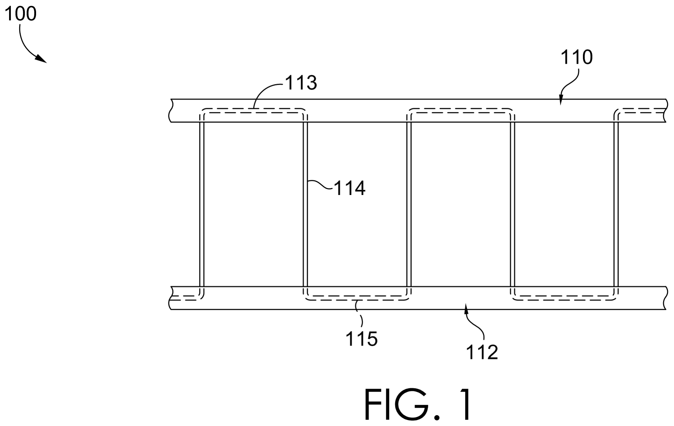

FIG. 1 depicts an example knit spacer textile 100. The knit spacer textile 100 includes a first knit layer 110 extending in an x, y plane and a second knit layer 112 extending in an x, y plane, where the second knit layer 112 is parallel to and offset or spaced apart from the first knit layer 110 by one or more tie yarns 114 that are interknitted with the first knit layer 110 and the second knit layer 112. In example aspects, the tie yarn 114 may include a bare elastic yarn such as, for example, a bare spandex yarn. For example, the tie yarn 114 may include a single filament of spandex or elastane having a denier from about 10D to about 45D, from about 15D to about 40D, or from about 20D to about 30D. As used herein, the term "about" means within ± 10% of an indicated value. As stated, use of a bare spandex tie yarn minimizes the transfer of moisture between the first knit layer 110 and the second knit layer 112 due at least to the low moisture regain of spandex and its smooth surface. Moreover, use of an elastic tie yarn helps to tension the first knit layer 110 and the second knit layer 112 toward each other to minimize the thickness of the knit spacer textile 100. This creates a low-profile aesthetic suitable for use in form-fitting athletic wear.

Although only one tie yarn 114 is depicted, it is contemplated herein that more than one tie yarn 114 may be used to interconnect the first knit layer 110 and the second knit layer 112. The portions of the tie yarn 114 indicated by reference numerals 113 and 115 and shown in dashed lines to indicate they are generally hidden from view represents those areas of the tie yarn 114 that are interlooped with the yarns forming the first knit layer 110 and the second knit layer 112 respectively. As used throughout this disclosure, the term "loop" or "loop portion" when referring to tie yarns refers to the portion of the tie yarn that extends into the first knit layer 110 and the second knit layer 112 and is interlooped with yarns in the first knit layer 110 and the second knit layer 112.

The depiction of the knit spacer textile 100 shown in FIG. 1 is illustrative only. For example, it is contemplated herein that the first knit layer 110 and the second knit layer 112 may be positioned closer to each other than shown. As well, the orientation of the tie yarns 114 may be different than that shown. For instance, instead of the tie yarns 114 being perpendicular to the x, y plane of the first knit layer 110 and the second knit layer 112 as shown, the tie yarns 114 may be oriented at angles less than 90 degrees. Any and all aspects, and any variation thereof, are contemplated as being within the scope herein.

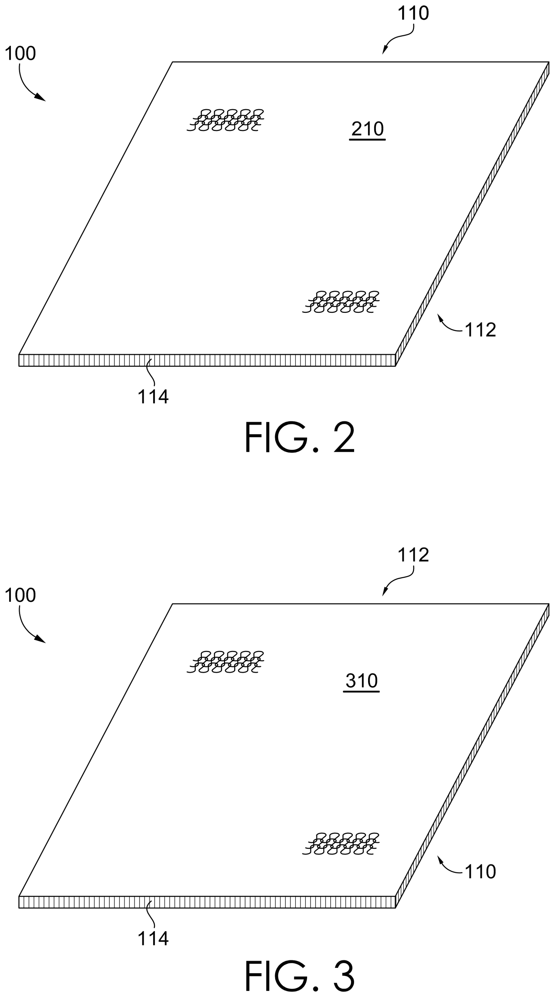

FIG. 2 depicts a view of a first surface 210 of the knit spacer textile 100 formed by the first knit layer 110 of the knit spacer textile 100 where the first knit layer 110 is formed from yarns that have been treated with a DWR finish. Portions of the interlooped knit stitches forming the first knit layer 110 are depicted on the first surface 210. When incorporated into a garment, the first surface 210 would form an outer-facing surface, and in some aspects, an outermost-facing surface of the garment. The tie yarns 114 and the second knit layer 112 are further depicted in FIG. 2.

FIG. 3 depicts a view of a second surface 310 of the knit spacer textile 100 formed by the second knit layer 112 of the knit spacer textile 100 where the second surface 310 is opposite the first surface 210. The second knit layer 112 is formed from yarns that have been treated with a wicking finish. Portions of the interlooped knit stitches forming the second knit layer 112 are depicted on the second surface 310. When incorporated into a garment, the second surface 310 is positioned adjacent a skin surface of a wearer and forms an inner-facing surface, and in some aspects, an innermost-facing surface of the garment. The tie yarns 114 and the first knit layer 110 are further depicted in FIG. 3.

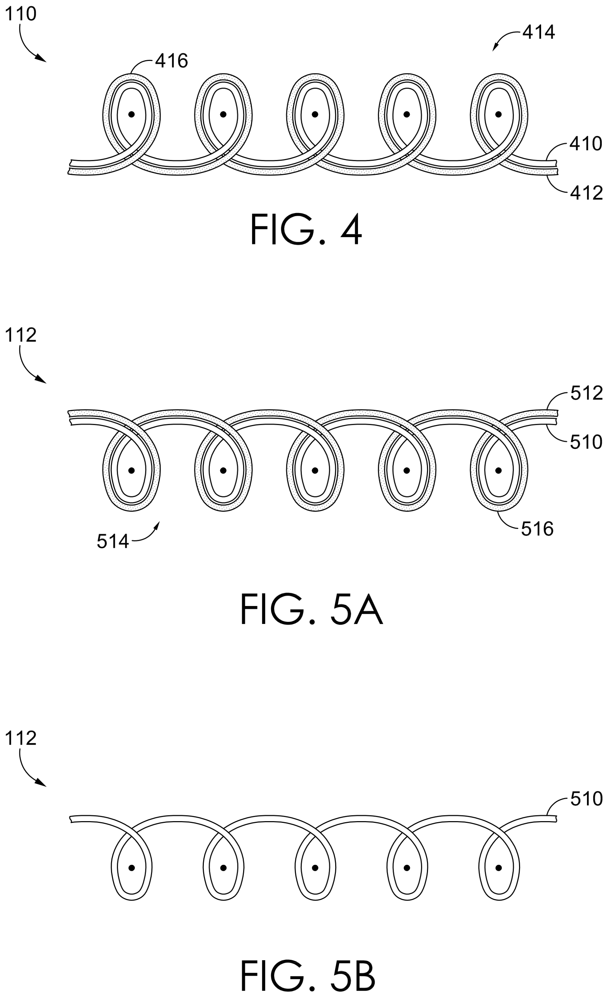

FIG. 4 depicts a schematic depiction of a knit structure for the first knit layer 110 as positioned on a knit machine. Needles on the knit machine are illustrated as black circles. The first knit layer 110 is formed from a first yarn 410 and a second yarn 412 that is in a plated relationship with the first yarn 410. Each of the first yarn 410 and the second yarn 412 may be knit in a plurality of knit courses 414 (one of which is shown), where each knit course 414 includes consecutive interlooped knit stitches such as knit stitch 416. It is also contemplated herein that the knit courses 414 may include additional or alternative stitch types using the first yarn 410 and the second yarn 412 such as a missed stitch, a float stitch, a tuck stitch, and the like.

In example aspects, the first yarn 410 is a recycled polyester yarn that has previously been treated with a DWR finish. In example aspects, the first yarn 410 may have a denier from about 20D to about 60D, from about 30D to about 50D, or about 40D. The first yarn 410 may include from about 35 filaments to about 60 filaments, from about 40 filaments to about 55 filaments, or about 48 filaments. Selection of a denier and filament count within these ranges contribute to the lightweight features of the knit spacer textile 100 while still providing needed opacity for modesty and durability. In example aspects, the second yarn 412 is an elastic yarn, including a bare elastic yarn, such as spandex having a denier from about 15D to about 40D, from about 25D to about 35D, or from about 20D to about 30D. Use of the elastic second yarn 412 creates a tight knit construction which may act as a barrier to moisture penetration, promote opacity, and may contribute to the overall stretch and recovery characteristics of the knit spacer textile 100.

FIG. 5A depicts a schematic depiction of a first example knit structure for the second knit layer 112 as positioned on a knit machine. Needles on the knit machine are illustrated as black circles. The second knit layer 112 is formed from a first yarn 510 and a second yarn 512 that is in a plated relationship with the first yarn 510. Each of the first yarn 510 and the second yarn 512 may be knit in a plurality of knit courses 514 (one of which is shown), where each knit course 514 includes consecutive interlooped knit stitches such as knit stitch 516. It is also contemplated herein that the knit courses 514 may include additional or alternative stitch types using the first yarn 510 and the second yarn 512 such as a missed stitch, a float stitch, a tuck stitch, and the like. FIG. 5B illustrates a second example knit construction for the second knit layer that includes just the first yarn 510 without the plated second yarn 512.

In example aspects, the first yarn 510 is a recycled polyester yarn that has previously been treated with a wicking finish. In example aspects, the first yarn 510 may have a denier from about 20D to about 60D, from about 30D to about 50D, or about 40D. The first yarn 510 may include from about 60 filaments to about 80 filaments, from about 65 filaments to about 75 filaments, or about 72 filaments. Selection of a denier within this range contributes to the lightweight features of the knit spacer textile 100 while still providing needed opacity for modesty and durability. Selection of the number of filaments in this range may provide a greater surface area for moisture wicking. By contrast, since the first knit layer 110 is configured to repel moisture and not wick moisture, a greater number of filaments may not be needed in the first knit layer 110. In example aspects, the second yarn 512, when used, is an elastic yarn, including a bare elastic yarn, such as spandex having a denier from about 15D to about 40D, from about 25D to about 35D, or about 30D. Use of the elastic second yarn 512 creates a tight knit construction and may contribute to the overall stretch and recovery characteristics of the knit spacer textile 100.

In example aspects, parameters associated with the first knit layer 110, the second knit layer 112, and the tie yarns 114 may be modified based on an intended end use of the knit spacer textile 100. The parameters may include knitting gauge, denier of elastic yarns used, and use of an elastic yarn for the second knit layer 112. For example, when comparing use of the knit spacer textile 100 in a lower-body garment in the form of tights or leggings versus an upper-body garment, it may be desirable for lower-body garments to have a relatively higher degree of stretch and recovery to accommodate and support the bigger muscle groups in the lower body. Moreover, it may be desirable to have a relatively higher degree of opacity in the lower-body garment. In contrast, a lighter fabric weight and less stretch and recovery may be desirable for an upper-body garment to aid in donning and doffing and wearer comfort.

To achieve the desired properties of opacity and a relatively higher degree of stretch and recovery for a lower-body garment, in one example aspect, the knit spacer textile 100 may utilize the knit structure depicted in FIG. 4 for the first knit layer 110 and the knit structure depicted in FIG. 5A for the second knit layer 112. The knit spacer textile 100 may be knit on a 36 gauge knit machine, which creates a tight knit construction to help provide opacity. In example aspects, a higher denier elastic yarn, as compared to an upper-body garment, may be used to enhance the stretch and recovery properties of the knit spacer textile 100. For example, for the first knit layer 110, the second yarn 412 may have a denier from about 25D to about 35D or about 30D; for the second knit layer 112, the second yarn 512 may have a denier from about 25D to about 35D, or about 30D; and for the tie yarns 114, the tie yarns 114 may have a denier from about 25D to about 35D, or about 30D. Use of a relatively higher denier elastic yarn may also contribute to the tight knit construction and resulting opacity. The parameters described above for the knit spacer textile 100 for the lower-body garment creates an overall fabric weight from about 220 grams per square meter (gsm) to about 270 gsm, from about 230 gsm to about 260 gsm, or about 250 gsm. A comparatively heavier weight fabric may also enhance the opacity of the lower-body garment. The material content for the lower-body garment may include by weight about 70% recycled polyester and 30% elastic, about 75% recycled polyester and 25% elastic, or about 77% recycled polyester and 23% elastic in order to achieve the desired stretch and recovery properties of the lower-body garment.

To achieve the desired properties for an upper-body garment, in one example aspect, the knit spacer textile 100 may utilize the knit structure depicted in FIG. 4 for the first knit layer 110 and the knit structure depicted in FIG. 5B for the second knit layer 112. The knit spacer textile 100 may be knit on a 34 gauge knit machine, which creates a relatively tight knit construction to help provide opacity. In example aspects, a lower denier elastic yarn, as compared to the knit spacer textile 100 for the lower-body garment, may be used since a high degree of stretch and recovery may not be as necessary when compared to the lower-body garment due to the smaller muscle groups in the upper body. For example, for the first knit layer 110, the second yarn 412 may have a denier from about 15D to about 25D, or about 20D, and for the tie yarns 114, the tie yarns 114 may have a denier from about 15D to about 25D, or about 20D; the second knit layer 112 does not include an elastic yarn. The parameters described above for the knit spacer textile 100 for the upper-body garment creates an overall fabric weight from about 120 grams per square meter (gsm) to about 160 gsm, from about 130 gsm to about 150 gsm, or about 140 gsm. A relatively lighter-weight fabric for the upper-body garment may be desirable for comfort. The material content for the lower-body garment may include by weight about 80% recycled polyester and 20% elastic, about 85% recycled polyester and 16% elastic, or about 88% recycled polyester and 12% elastic reflecting the relative reduced need for stretch and recovery in the upper-body garment.

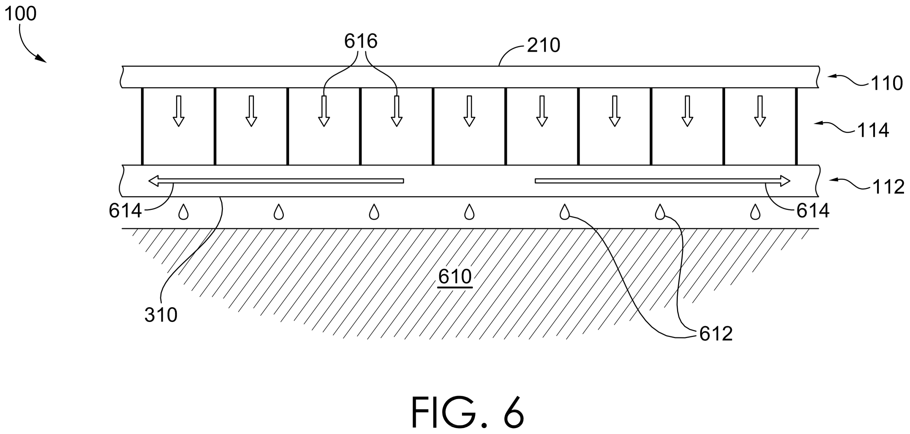

FIG. 6 depicts a schematic of the knit spacer textile 100 as positioned with respect to a body surface 610 of a wearer. As shown, the second surface 310 of the second knit layer 112 is positioned directly adjacent to the body surface 610 and may, in aspects, be in direct contact with the body surface 610. The first knit layer 110 is spaced apart from the second knit layer 112 by the tie yarns 114 such that the first knit layer 110 is not in contact with the body surface 610 of the wearer. When the wearer's body surface 610 begins to perspire as indicated by reference numeral 612, the perspiration 612 is taken up by the second knit layer 112 based at least in part on the wicking finish that coats the first yarns 510 that form the second knit layer 112. The perspiration 612 spreads laterally along the second knit layer 112 as indicated by arrows 614 where it evaporates due to the open knit structure of the second knit layer 112 and of the knit spacer textile 100 in general. Transport of the perspiration 612 to the first knit layer 110 is minimized through use of the bare elastic tie yarns 114. Any perspiration 612 that is transported to the first knit layer 110 is generally repelled as indicated by arrows 616 based at least in part on the DWR finish that coats the first yarns 410 that form the first knit layer 110. This action minimizes the appearance of the perspiration 612 on the first surface 210 of the knit spacer textile 100. Thus, the knit spacer textile 100 serves the dual purpose of wicking perspiration away from a wearer's skin where it can then evaporate while minimizing the appearance of the perspiration on the first surface 210 of the knit spacer textile 100 thus preserving modesty and providing a clean aesthetic.

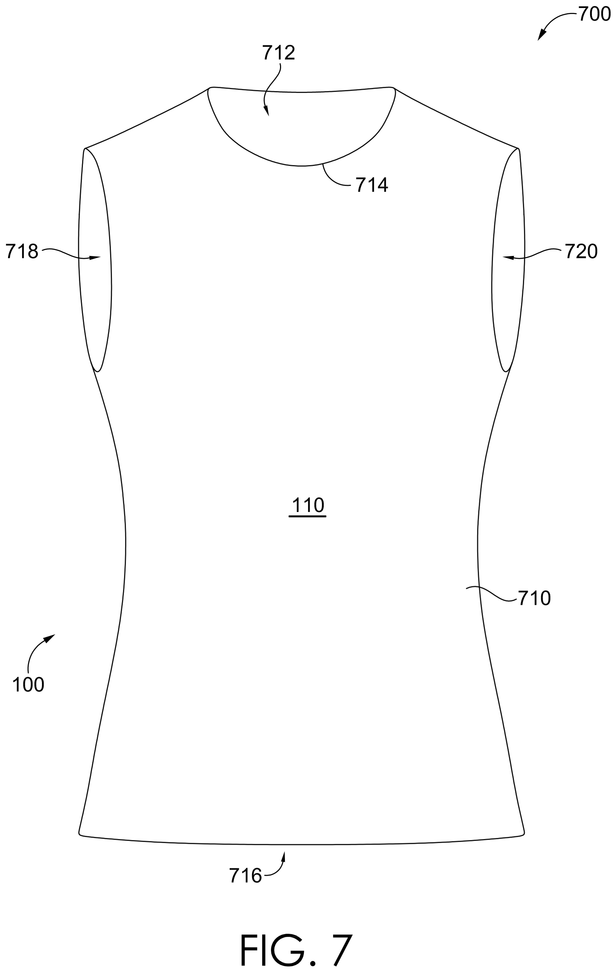

FIG. 7 illustrates an upper-body garment 700 formed in whole, or in part, from the knit spacer textile 100. In example aspects, the first knit layer 110 is formed from the knit structure shown in FIG. 4 and is positioned to face outward or externally as shown. Thus, the first knit layer 110 forms an outer-facing surface of the upper-body garment 700. In example aspects, the second knit layer 112 (not seen) is formed from the knit structure shown in FIG. 5B and faces inwardly to form an inner-facing surface of the upper-body garment 700. The upper-body garment 700 is depicted as a form-fitting tank having a front torso portion 710, a back torso portion 712, a neck opening 714, a waist opening 716, a first sleeve opening 718, and an opposite second sleeve opening 720. Although shown as a tank, it is contemplated herein that the upper-body garment 700 may include other configurations such as, for example, a top with sleeves, a jacket, a support garment, a bra, a hoodie, a half-tank, and the like.

As described above, parameters of the knit spacer textile 100 may be adjusted to achieve desirable properties for the upper-body garment 700 including a desired amount of stretch and recovery, a desired level of opacity, a desired weight, and the like, while still providing moisture wicking and perspiration concealing properties.

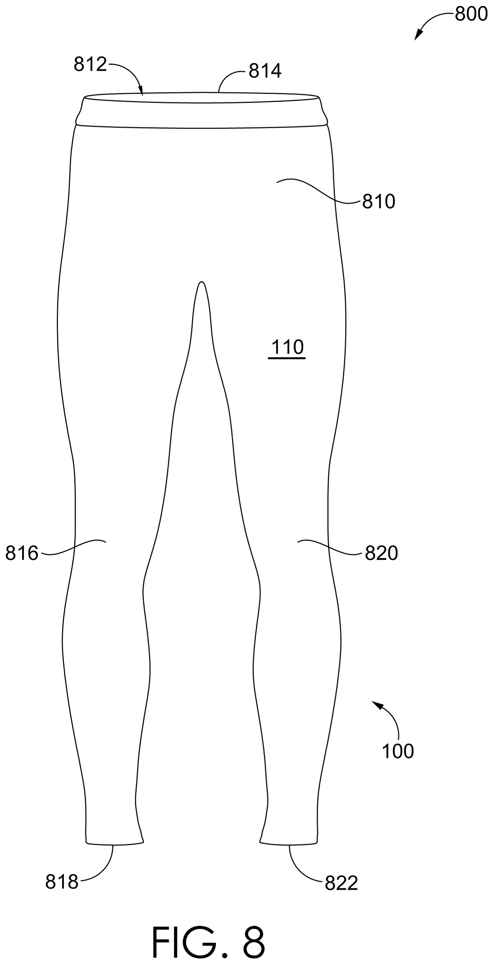

FIG. 8 illustrates a lower-body garment 800 formed in whole, or in part, from the knit spacer textile 100. In example aspects, the first knit layer 110 is formed from the knit structure shown in FIG. 4 and is positioned to face outward or externally as shown. Thus, the first knit layer 110 forms an outer-facing surface of the lower-body garment 800. In example aspects, the second knit layer 112 (not seen) faces inwardly and is formed from the knit structure shown in FIG. 5A; the second knit layer 112 forms an inner-facing surface of the lower-body garment 800. The lower-body garment 800 is depicted as a form-fitting legging having a front torso portion 810, a back torso portion 812, a waist opening 814, a first leg portion 816 having a first leg opening 818, and a second leg portion 820 having a second leg opening 822. Although shown as a legging, it is contemplated herein that the lower-body garment 800 may include other configurations such as, for example, a three-quarter tight, a half-tight, a short, a singlet, a unitard, and the like.

As described above, parameters of the knit spacer textile 100 may be adjusted to achieve desirable properties for the lower-body garment 800 including a desired amount of stretch and recovery, a desired level of opacity, a desired weight, and the like, while still providing moisture wicking and perspiration concealing properties.

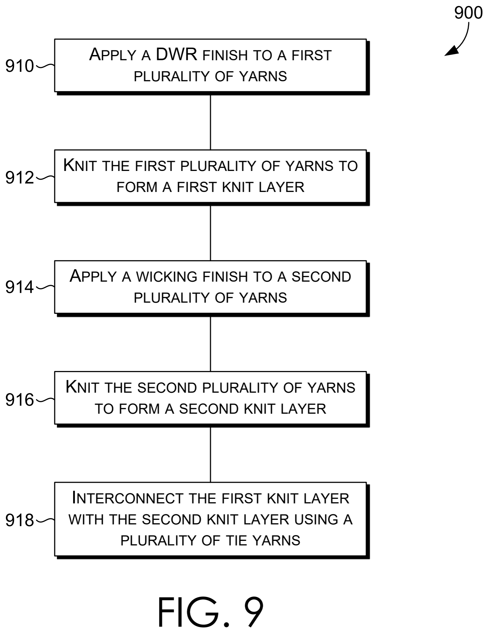

FIG. 9 depicts a flow diagram of an example method 900 of manufacturing a knit spacer textile such as the knit spacer textile 100. At a step 910, a DWR finish is applied to a first plurality of yarns such as the first yarns 410. In example aspects, the DWR finish is applied after the first plurality of yarns have undergone a dyeing process but before the first plurality of yarns are knitted to form the knit spacer textile. An example method of applying the DWR finish is an exhaustion process where the first plurality of yarns pass through a water bath containing the DWR finish. In one example aspect, the first plurality of yarns may be in the water bath for about 30 minutes at about 50 degrees Celsius to ensure adequate coating of the DWR finish. In example aspects, this process may coat from about 80% to about 100% of the surface area of the yarns with the DWR finish, from about 90% to about 100% of the surface area of the yarns with the DWR finish, or about 100% of the surface area of the yarns with the DWR finish. At a step 912, subsequent to applying the DWR finish to the first plurality of yarns using the exhaustion process, the first plurality of yarns is knitted to form the first knit layer. In example aspects, a no-snag chemical finish may be applied to the first knit layer to reduce snagging. In example aspects, the first plurality of yarns may be plated with second yarns such as the second yarn 412 where the second yarn may include bare elastic yarns.

At a step 914, a wicking finish is applied to a second plurality of yarns such as the first yarns 510. In example aspects, the wicking finish is applied after the second plurality of yarns have undergone a dyeing process but before the second plurality of yarns are knitted to form the knit spacer textile. Similar to the application method for the DWR finish, an example method of applying the wicking finish is an exhaustion process where the second plurality of yarns pass through a water bath containing the wicking finish. In one example aspect, the second plurality of yarns may be in the water bath for about 30 minutes at 50 degrees Celsius to ensure adequate coating of the wicking finish. This process may coat from about 80% to about 100% of the surface area of the yarns with the wicking finish, from about 90% to about 100% of the surface area of the yarns with the wicking finish, or about 100% of the surface area of the yarns with the wicking finish. At a step 916, subsequent to applying the wicking finish to the second plurality of yarns using the exhaustion process, the second plurality of yarns is knitted to form the second knit layer. In one example aspect, the second plurality of yarns may be plated with a second yarn, such as the second yarn 512, where the second yarn may include a bare elastic yarn. In this aspect, the second knit layer may be used in a lower-body garment where a higher degree of stretch and recovery may be desirable. In a second example aspect, the second knit layer may not include a second yarn. In this aspect, the second knit layer may be used in an upper-body garment where a high degree of stretch and recovery may not be needed.

At a step 918, the first knit layer is interconnected with the second knit layer using a plurality of tie yarns, such as the tie yarns 114, which may include bare elastic yarns. In example aspects, the tie yarns may not have a finish applied thereto.

The following clauses represent example aspects of concepts contemplated herein. Any one of the following clauses may be combined in a multiple dependent manner to depend from one or more other clauses. Further, any combination of dependent clauses (clauses that explicitly depend from a previous clause) may be combined while staying within the scope of aspects contemplated herein. The following clauses are examples and are not limiting.

Clause 1. A knit spacer textile comprising: a first knit layer formed from a first plurality of yarns that has been treated with a durable water repellant (DWR) finish prior to being formed into the first knit layer; a second knit layer formed from a second plurality of yarns that has been treated with a wicking finish prior to being formed into the second knit layer; and a plurality of tie yarns that interconnect the first knit layer and the second knit layer, the plurality of tie yarns including bare elastic yarns.

Clause 2. The knit spacer textile according to clause 1, wherein the first plurality of yarns includes recycled polyethylene terephthalate (PET) yarns.

Clause 3. The knit spacer textile according to any of clauses 1 through 2, wherein a bare elastic yarn is plated with the first plurality of yarns.

Clause 4. The knit spacer textile according to any of clauses 1 through 3, wherein the second plurality of yarns includes recycled polyethylene terephthalate (PET) yarns.

Clause 5. The knit spacer textile according to any of clauses 1 through 4, wherein a bare elastic yarn is plated with the second plurality of yarns.

Clause 6. A garment comprising: a knit spacer textile forming one or more portions of the garment, the knit spacer textile comprising: a first knit layer formed from a first plurality of yarns that has been treated with a durable water repellant (DWR) finish prior to being formed into the first knit layer, the first knit layer forming an outermost-facing surface of the garment; a second knit layer formed from a second plurality of yarns that has been treated with a wicking finish prior to being formed into the second knit layer, the second knit layer forming an innermost-facing surface of the garment; and a plurality of tie yarns that interconnect the first knit layer and the second knit layer, the plurality of tie yarns including bare elastic yarns.

Clause 7. The garment according to clause 6, wherein the first plurality of yarns includes recycled polyethylene terephthalate (PET) yarns.

Clause 8. The garment according to any of clauses 6 through 7, wherein a bare elastic yarn is plated with the first plurality of yarns.

Clause 9. The garment according to any of clauses 6 through 8, wherein the second plurality of yarns includes recycled polyethylene terephthalate (PET) yarns.

Clause 10. The garment according to any of clauses 6 through 9, wherein a bare elastic yarn is plated with the second plurality of yarns.

Clause 11. The garment according to any of clauses 6 through 10, wherein the garment is a lower-body tight.

Clause 12. The garment according to any of clauses 6 through 10, wherein the garment is an upper-body garment.

Clause 13. A method of manufacturing a knit spacer textile comprising: applying a durable water repellant (DWR) finish to a first plurality of yarns; subsequent to applying the DWR finish to the first plurality of yarns, knitting the first plurality of yarns to form a first knit layer; applying a wicking finish to a second plurality of yarns; subsequent to applying the wicking finish to the second plurality of yarns, knitting the second plurality of yarns to form a second knit layer; and interconnecting the first knit layer with the second knit layer using a plurality of tie yarns, the plurality of tie yarns including bare elastic yarns.

Clause 14. The method of manufacturing the knit spacer textile according to clause 13, wherein the DWR finish is applied to the first plurality of yarns after the first plurality of yarns has been dyed.

Clause 15. The method of manufacturing the knit spacer textile according to any of clauses 13 through 14, wherein the wicking finish is applied to the second plurality of yarns after the second plurality of yarns has been dyed.

Clause 16. The method of manufacturing the knit spacer textile according to any of clauses 13 through 15, wherein the DWR finish and the wicking finish are applied through an exhaustion process.

Clause 17. The method of manufacturing the knit spacer textile according to any of clauses 13 through 16, wherein knitting the first plurality of yarns to form the first knit layer includes plating the first plurality of yarns with a bare elastic yarn during the knitting process.

Clause 18. The method of manufacturing the knit spacer textile according to any of clauses 13 through 17, wherein knitting the second plurality of yarns to form the second knit layer includes plating the second plurality of yarns with a bare elastic yarn during the knitting process.

Clause 19. The method of manufacturing the knit spacer textile according to any of clauses 13 through 18, wherein both the first plurality of yarns and the second plurality of yarns include recycled polyethylene terephthalate (PET) yarns.

Clause 20. The method of manufacturing the knit spacer textile according to any of clauses 13 through 19, wherein the bare elastic yarns do not have a DWR finish or a wicking finish applied thereto.

Clause 21. An upper-body garment comprising: a knit spacer textile that comprises a first knit layer formed from a first plurality of yarns that has been treated with a durable water repellant (DWR) finish prior to being formed in the first knit layer, a second knit layer formed from a second plurality of yarns that has been treated with a wicking finish prior to being formed into the second knit layer, and a plurality of tie yarns that interconnect the first knit layer and the second knit layer, wherein the first plurality of yarns and the second plurality of yarns comprise from about 80% by weight to about 90% by weight of the knit spacer textile.

Clause 22. The upper-body garment according to clause 21, wherein each of the first plurality of yarns and the second plurality of yarns include recycled polyethylene terephthalate (PET) yarns.

Clause 23. The upper-body garment according to any of clauses 21 through 22, wherein the plurality of tie yarns include bare elastic yarns.

Clause 24. The upper-body garment according to any of clauses 21 through 23, wherein a bare elastic yarn is plated with the first plurality of yarns.

Clause 25. The upper-body garment according to any of clauses 21 through 24, wherein the second knit layer does not include elastic yarns.

Clause 26. The upper-body garment according to any of clauses 21 through 25, wherein the first knit layer forms an outer-facing surface of the upper-body garment.

Clause 27. The upper-body garment according to any of clauses 21 through 26, wherein the second knit layer forms an inner-facing surface of the upper-body garment.

Clause 28. The upper-body garment according to any of clauses 21 through 27, wherein the knit spacer textile comprises from about 10% by weight to about 20% by weight of elastic yarns.

Clause 29. The upper-body garment according to any of clauses 21 through 28, wherein the knit spacer textile has a weight from about 130 grams per square meter (gsm) to about 150 gsm.

Clause 30. A lower-body garment comprising: a knit spacer textile that comprises a first knit layer formed from a first plurality of yarns that has been treated with a durable water repellant (DWR) finish prior to being formed in the first knit layer, a second knit layer formed from a second plurality of yarns that has been treated with a wicking finish prior to being formed into the second knit layer, and a plurality of tie yarns that interconnect the first knit layer and the second knit layer, wherein the first plurality of yarns and the second plurality of yarns include from about 70% by weight to about 80% by weight of the knit spacer textile.

Clause 31. The lower-body garment according to clause 30, wherein each of the first plurality of yarns and the second plurality of yarns include recycled polyethylene terephthalate (PET) yarns.

Clause 32. The lower-body garment according to any of clauses 30 through 31, wherein the plurality of tie yarns include bare elastic yarns.

Clause 33. The lower-body garment according to any of clauses 30 through 32, wherein a bare elastic yarn is plated with the first plurality of yarns.

Clause 34. The lower-body garment according to any of clauses 30 through 33, wherein a bare elastic yarn is plated with the second plurality of yarns.

Clause 35. The lower-body garment according to any of clauses 30 through 34, wherein the first knit layer forms an outer-facing surface of the lower-body garment.

Clause 36. The lower-body garment according to any of clauses 30 through 35, wherein the second knit layer forms an inner-facing surface of the lower-body garment.

Clause 37. The lower-body garment according to any of clauses 30 through 36, wherein the knit spacer textile comprises from about 20% by weight to about 30% by weight of elastic yarns.

Clause 38. The lower-body garment according to any of clauses 30 through 37, wherein the knit spacer textile has a weight from about 240 grams per square meter (gsm) to about 260 gsm.

Clause 39. A knit spacer textile comprising: a first knit layer formed from a first plurality of yarns that has been treated with a durable water repellant (DWR) finish prior to being formed into the first knit layer such that from about 80% to about 100% of a surface area of the first plurality of yarns is coated with the DWR finish; a second knit layer formed from a second plurality of yarns that has been treated with a wicking finish prior to being formed into the second knit layer such that from about 80% to about 100% of a surface area of the second plurality of yarns is coated with the wicking finish; and a plurality of tie yarns that interconnect the first knit layer and the second knit layer.

Clause 40. The knit spacer textile according to clause 39, wherein the plurality of tie yarns include bare elastic yarns.

Clause 41. The knit spacer textile according to any of clauses 39 through 40, wherein the first plurality of yarns includes recycled polyethylene terephthalate (PET) yarns.

Clause 42. The knit spacer textile according to any of clauses 39 through 41, wherein a bare elastic yarn is plated with the first plurality of yarns.

Clause 43. The knit spacer textile according to any of clauses 39 through 42, wherein the second plurality of yarns includes recycled polyethylene terephthalate (PET) yarns.

Clause 44. The knit spacer textile according to any of clauses 39 through 43, wherein a bare elastic yarn is plated with the second plurality of yarns.

Aspects of the present disclosure have been described with the intent to be illustrative rather than restrictive. Alternative aspects will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations and are contemplated within the scope of the claims. Not all steps listed in the various figures need be carried out in the specific order described.

## Claims

1. An upper-body garment comprising: a knit spacer textile that comprises a first knit layer formed from a first plurality of yarns that has been treated with a durable water repellant (DWR) finish prior to being formed in the first knit layer, a second knit layer formed from a second plurality of yarns that has been treated with a wicking finish prior to being formed into the second knit layer, and a plurality of tie yarns that interconnect the first knit layer and the second knit layer, wherein the first plurality of yarns and the second plurality of yarns comprise from about 80% by weight to about 90% by weight of the knit spacer textile.

2. The upper-body garment according to claim 1, wherein each of the first plurality of yarns and the second plurality of yarns include recycled polyethylene terephthalate (PET) yarns.

3. The upper-body garment according to claim 1 or 2, wherein the plurality of tie yarns include bare elastic yarns.

4. The upper-body garment according to any of claims 1 through 3, wherein a bare elastic yarn is plated with the first plurality of yarns.

5. The upper-body garment according to any of claims 1 through 4, wherein the second knit layer does not include elastic yarns.

6. The upper-body garment according to any of claims 1 through 5, wherein the first knit layer forms an outer-facing surface of the upper-body garment, and/or wherein the second knit layer forms an inner-facing surface of the upper-body garment.

7. The upper-body garment according to any of claims 1 through 6, wherein the knit spacer textile comprises from about 10% by weight to about 20% by weight of elastic yarns.

8. The upper-body garment according to any of claims 1 through 7, wherein the knit spacer textile has a weight from about 130 grams per square meter (gsm) to about 150 gsm.

9. A lower-body garment comprising: a knit spacer textile that comprises a first knit layer formed from a first plurality of yarns that has been treated with a durable water repellant (DWR) finish prior to being formed in the first knit layer, a second knit layer formed from a second plurality of yarns that has been treated with a wicking finish prior to being formed into the second knit layer, and a plurality of tie yarns that interconnect the first knit layer and the second knit layer, wherein the first plurality of yarns and the second plurality of yarns include from about 70% by weight to about 80% by weight of the knit spacer textile.

10. The lower-body garment according to claim 9, wherein each of the first plurality of yarns and the second plurality of yarns include recycled polyethylene terephthalate (PET) yarns.

11. The lower-body garment according to claim 9 or 10, wherein the plurality of tie yarns include bare elastic yarns.

12. The lower-body garment according to any of claims 9 through 11, wherein a bare elastic yarn is plated with the first plurality of yarns, and/or wherein a bare elastic yarn is plated with the second plurality of yarns.

13. The lower-body garment according to any of claims 9 through 12, wherein the first knit layer forms an outer-facing surface of the lower-body garment, and/or wherein the second knit layer forms an inner-facing surface of the lower-body garment.

14. The lower-body garment according to any of claims 9 through 13, wherein the knit spacer textile comprises from about 20% by weight to about 30% by weight of elastic yarns.

15. The lower-body garment according to any of claims 9 through 14, wherein the knit spacer textile has a weight from about 240 grams per square meter (gsm) to about 260 gsm.
